(19) **Europäisches Patentamt European Patent Office Office européen des brevets**

(11) **EP 4 501 654 A1**

(12) **EUROPEAN PATENT APPLICATION**
published in accordance with Art. 153(4) EPC

(43) Date of publication:
**05.02.2025 Bulletin 2025/06**

(21) Application number: **23779299.9**

(22) Date of filing: **07.03.2023**

(51) International Patent Classification (IPC):
*B41M 1/04* (2006.01)    *B41N 1/12* (2006.01)
*C09D 4/02* (2006.01)    *C09D 11/101* (2014.01)

(52) Cooperative Patent Classification (CPC):
**B41M 1/04; B41N 1/12; C09D 4/00; C09D 11/101**

(86) International application number:
**PCT/JP2023/008505**

(87) International publication number:
**WO 2023/189272 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.03.2022 JP 2022053112**

(71) Applicant: **Toray Industries, Inc.**
**Tokyo 103-8666 (JP)**

(72) Inventors:
• **TSUJI, Yuichi**
  **Otsu-shi, Shiga 520-8558 (JP)**
• **INOUE, Takejiro**
  **Otsu-shi, Shiga 520-8558 (JP)**

(74) Representative: **Kador & Partner Part mbB**
**Corneliusstraße 15**
**80469 München (DE)**

(54) **PRODUCTION METHOD FOR PRINTED MATTER, AND ACTINIC-RAY-CURABLE INK**

(57) The present invention addresses the problem of providing a production method in which printed matter of stable quality is obtained even by continuous printing, by combining a specific flexographic printing plate with an actinic-ray-curable ink. In this production method for printed matter are used: a flexographic printing plate comprising a substrate and a resin layer having a printing relief; and an actinic-ray-curable ink comprising at least one polyfunctional (meth)acrylate and a pigment. The production method for printed matter satisfies the following (A) to (C). (A) The resin layer having a printing relief includes a compound A having an SP value, as calculated by the Fedors method, of 10.0 or greater, in an amount of 30 mass% or larger. (B) The polyfunctional (meth)acrylate has an SP value, as calculated by the Fedors method, of 8.0-9.5. (C) The ink has a content of the polyfunctional (meth)acrylate satisfying said SP value of 40-85 mass%.

**EP 4 501 654 A1**

## Description

TECHNICAL FIELD

The present invention relates to a method for producing a printed matter and an actinic-ray-curable ink.

BACKGROUND ART

With the increase in the global population, demand for flexible packaging used for packaging mainly for food and daily necessities is expected to continue to grow. The flexible packaging is said to be printing on a plastic film, performing lamination after the printing, and forming the film into a bag shape. At present, gravure printing, which is mainstream in flexible packaging printing in Asia, provides a printed matter with vivid appearance, and flexographic printing, which is mainstream in flexible packaging printing in Europe, is characterized by simple operation and high productivity by high-speed printing. However, since an ink containing a large amount of a solvent is used in any method, a large amount of energy is required for drying an ink solvent and an exhaust treatment, and an environmental load is also large. In addition, in recent years, there has been a demand for a reduction in volatile components contained in an ink in order to deal with environmental issues and carbon neutral.

For this reason, the use of an actinic-ray-curable ink, which is free from volatile components and is instantaneously curable with an active energy ray irradiation, is in progress in flexographic printing (Patent Document 1). In the flexible packaging printing, roll-to-roll printing is performed, and hence the quick-drying property of the ink is important, and in addition to environmental advantages, actinic-ray-curable flexographic printing using the actinic-ray-curable ink has energy saving and high productivity because a drying process is shortened while no heat energy is used.

In general, the actinic-ray-curable ink is instantaneously cured by irradiation with an active energy ray, and thus contains a (meth)acrylate as a main component instead of a solvent. In the flexographic printing, printing is performed by applying an ink to an apex of a relief (protrusion) and press-bonding the ink to a substrate to transfer the ink, but when a (meth)acrylate in the ink permeates into a relief part of a flexographic printing plate, the ink swells as continuous printing is performed, halftone dots further spread than those at the start of printing, and printing quality deteriorates. The ink is likely to accumulate at the edge of the apex of the protrusion, and a printing defect called plate entanglement in which the ink adheres to a portion other than the printing line is likely to occur as continuous printing is performed.

For this reason, a method for suppressing the halftone mottle of ink by using a water-developable photosensitive flexographic printing original plate that includes a fluorine-containing compound having an ionic functional group, has been proposed (Patent Document 2).

PRIOR ART DOCUMENTS

PATENT DOCUMENTS

Patent Document 1: International Publication No. 2019/69736
Patent Document 2: International Publication No. 2018/88336

SUMMARY OF THE INVENTION

PROBLEMS TO BE SOLVED BY THE INVENTION

In Patent Document 2, a certain effect of suppressing ink entanglement can be obtained by improving the flexographic printing plate side, but plate entanglement is a phenomenon that is essentially affected by both the characteristics of the plate and the characteristics of the ink, and thus the suppressing effect may be limited depending on the ink.

Therefore, an object of the present invention is to provide a production method in which a printed matter of stable quality is obtainable even by continuous printing, by combining a specific flexographic printing plate with an actinic-ray-curable ink.

SOLUTIONS TO THE PROBLEMS

That is, the present invention is a method for producing a printed matter, the method using a flexographic printing plate including a base material and a resin layer having a printing relief formed thereon, and an actinic-ray-curable ink containing at least one or more polyfunctional (meth)acrylates and a pigment, the method satisfying the following (A) to (C):

(A) the resin layer having a printing relief formed thereon contains 30 mass% or more of a compound A having an SP value, as calculated by the Fedors method, of 10.0 or more;
(B) an SP value of the polyfunctional (meth)acrylate as calculated by the Fedors method is 8.0 or more and 9.5 or less; and
(C) a content of the polyfunctional (meth)acrylate satisfying the SP value in the ink is 40 mass% or more and 85 mass% or less.

The present invention is an actinic-ray-curable ink containing at least one or more polyfunctional (meth)acrylates and a pigment, in which an SP value of the polyfunctional (meth)acrylate as calculated by the Fedors method is 8.0 or more and 9.5 or less, the polyfunctional (meth)acrylate contains tricyclodecane dimethanol diacrylate, and a content of the polyfunctional (meth)acrylate satisfying the SP value in the ink is 40 mass% or more and 85 mass% or less.

EFFECTS OF THE INVENTION

According to the method for producing a printed matter according to the present invention, by combining a specific flexographic printing plate with an actinic-ray-curable ink, deformation of a plate due to an ink component is suppressed, and spread of halftone dots and ink entanglement are suppressed, so that a printed matter of stable quality is obtainable even by continuous printing. Moreover, the obtained printed matter exhibits excellent film adhesion.

EMBODIMENTS OF THE INVENTION

Hereinafter, the present invention will be specifically described. In the present invention, "or more" means the same as or more than the numerical value indicated therein. Further, "or less" means the same as or less than the numerical value indicated therein. Moreover, "(meth)acrylate" is a generic term including acrylate and methacrylate.
The present invention is a method for producing a printed matter, the method using a flexographic printing plate including a base material and a resin layer having a printing relief formed thereon, and an actinic-ray-curable ink containing at least one or more polyfunctional (meth)acrylates and a pigment, in which the method satisfies the following (A) to (C):

(A) the resin layer having a printing relief formed thereon contains 30 mass% or more of a compound A having an SP value, as calculated by the Fedors method, of 10.0 or more;
(B) an SP value of the polyfunctional (meth)acrylate as calculated by the Fedors method is 8.0 or more and 9.5 or less; and
(C) a content of the polyfunctional (meth)acrylate satisfying the SP value in the ink is 40 mass% or more and 85 mass% or less.

Satisfying the above (A) to (C) means that the SP values of the main components of the resin layer on which the printing relief is formed and the actinic-ray-curable ink are separated from each other, and the affinity is low. Since these main components have low compatibility with each other, the polyfunctional (meth)acrylate hardly swells the resin layer on which the printing relief is formed, so that deformation of the printing plate during continuous printing is suppressed, and the printing quality is stabilized.
The SP value (solubility parameter) in the present invention is a value as calculated by the Fedors method (Robert F. Fedors, Polymer Engineering and Science, 14, 147-154 (1974)), and can be calculated by using the following Formula (1).

$$\delta = (E/V)1/2 \cdots \text{Formula (1)}$$

In Formula (1), $\delta$ represents the SP value, E represents aggregation energy (cal/mol), and V represents a molar volume (cm$^3$/mol).

[Flexographic printing plate]

The flexographic printing plate includes a base material and a resin layer having a printing relief formed thereon.

(Base material)

The base material is preferably excellent in dimensional stability against heat or physical stress, and in use, may be, for example, a plastic sheet such as polyester, or a metal plate such as steel, stainless steel or aluminum.

A thickness of the base material is preferably 100 μm or more and 350 μm or less from the viewpoint of handleability and flexibility. A thickness of 100 μm or more leads to improved handleability as a support, and a thickness of 350 μm or less leads to improved flexibility as a flexographic printing plate.

(Resin layer)

The resin layer having a printing relief formed thereon contains a compound A having an SP value, as calculated by the Fedors method, of 10.0 or more. The SP value of the compound A is preferably 12.0 or more because compatibility with the ink is further lowered and continuous printing quality is stabilized.

A conventional general flexographic plate is made of a rubber component, has high hydrophobicity, and has an SP value lower than 10, and thus has a polarity close to that of the actinic-ray-curable ink and is likely to swell. If a (meth) acrylate having a higher polarity, that is, an SP value higher than 10 is combined, similar swelling suppression can be expected, but since the (meth)acrylate having a polar group has a high viscosity, it is practically difficult to adjust the viscosity of the actinic-ray-curable ink to a viscosity suitable for flexographic printing.

Therefore, in the present invention, the SP value of the flexographic printing plate is increased by the compound A, and a polyfunctional (meth)acrylate having an SP value lower than that of the compound A is contained in an actinic-ray-curable ink described later, so that deformation of the plate due to the ink component can be suppressed while adjusting the viscosity of the actinic-ray-curable ink to a viscosity suitable for flexographic printing.

The compound A is preferably one or more selected from nitrile butadiene rubber, urethane rubber, chlorinated polyethylene, vinyl acetate rubber, polyvinyl alcohol, polyamide, polyurethane, polyvinyl pyrrolidone, polyether, and polyester. These rubbers and resins have a highly hydrophilic functional group in the main chain or are easily introduced into the side chain, and can suppress swelling due to ink.

The compound A preferably have at least any one of a hydroxyl group and an ethylene oxide group. These highly hydrophilic functional groups have low compatibility with a hydrophobic functional group.

It is preferable that the compound A does not contain a (meth)acrylate group. When the compound A does not contain a (meth)acrylate group, affinity with the polyfunctional (meth)acrylate that is a main component of the ink in the present invention can be suppressed.

The resin layer contains 30 mass% or more of the compound A. When the resin layer contains 30 mass% or more, preferably 50 mass% or more of the compound A, compatibility with the ink is lowered, and continuous printing quality is stabilized. The content of the compound A is preferably 99.5 mass% or less in order to leave room for addition of additives such as a photopolymerization initiator and a UV absorber.

The resin layer may contain a plasticizer for adjusting the hardness of the printing relief.

A swelling rate after the resin layer is brought into contact with 1,6-hexanediol diacrylate at 25°C for 24 hours is preferably 5 mass% or less. The SP value of 1,6-hexanediol diacrylate is 9.5. When the swelling rate after the resin layer is brought into contact with 1,6-hexanediol diacrylate under the above conditions is 5 mass% or less, the swellability with respect to the compound is low, the swellability with respect to the ink used in the method for producing a printed matter of the present invention is also low, and continuous printing quality is stabilized.

[Actinic-ray-curable ink]

The actinic-ray-curable ink used in the method for producing a printed matter of the present invention and the actinic-ray-curable ink of the present invention (these inks are also collectively referred to as "actinic-ray-curable ink in the present invention" hereinafter when features common to both inks are described) contain at least one or more polyfunctional (meth)acrylates and a pigment.

(Polyfunctional (meth)acrylate)

The polyfunctional (meth)acrylate contained in the actinic-ray-curable ink used in the method for producing a printed matter of the present invention preferably contains an alicyclic skeleton or an aliphatic skeleton having 6 to 18 carbon atoms because the swelling of the flexographic printing plate used in the present invention is reduced. In particular, it is preferable to contain tricyclodecane dimethanol diacrylate having low swellability and high adhesion to a base material.

The polyfunctional (meth)acrylate contained in the actinic-ray-curable ink of the present invention contains tricyclodecane dimethanol diacrylate.

Specific examples of the polyfunctional (meth)acrylate include, as bifunctional, 1,6-hexanediol di(meth)acrylate (SP value: 9.5), 1,9-nonanediol di(meth)acrylate (SP value: 9.4), 1,10-decanediol di(meth)acrylate (SP value: 9.3), tripropylene glycol di(meth)acrylate (SP value: 9.3), polypropylene glycol di(meth)acrylate (SP value: 9.1), neopentyl glycol di(meth)acrylate (SP value: 9.2), and dicyclopentadiene tricyclodecanedimethanol di(meth)acrylate (SP value: 9.2), and include, as trifunctional, propylene oxide adduct of trimethylolpropane tri(meth)acrylate (SP value: 9.4). Among them, tricyclodecane dimethanol diacrylate is preferable.

The polyfunctional (meth)acrylate includes those having an SP value as calculated by the Fedors method of 8.0 or more and 9.5 or less. By containing the polyfunctional (meth)acrylate having an SP value of 9.5 or less, preferably 9.3 or less, compatibility with the flexographic printing plate is further lowered, and continuous printing quality is stabilized. As the directivity of further lowering the compatibility with the flexographic printing plate, the polyfunctional (meth)acrylate is set to have an SP value lower than the SP value of the resin layer, instead of having an SP value higher than the SP value of the resin layer, so that an increase in viscosity of the polyfunctional (meth)acrylate due to having a polar group can be suppressed, and the viscosity of the actinic-ray-curable ink can be easily adjusted to a viscosity suitable for flexographic printing. When the polyfunctional (meth)acrylate having an SP value of 8.0 or more is contained, patterning properties due to photosensitivity are excellent.

A content of the polyfunctional (meth)acrylate satisfying the SP value in the ink is 40 mass% or more and 85 mass% or less. When the content is 40 mass% or more, preferably 50 mass% or more, the compatibility with the flexographic printing plate is further lowered, and the continuous printing quality is stabilized. The content is 85 mass% or less, and preferably 80 mass% or less.

It is preferable that the polyfunctional (meth)acrylate does not contain an alkylene oxide group. According to this aspect, swelling of the flexographic printing plate can be suppressed.

A number average molecular weight of the polyfunctional (meth)acrylate is preferably 200 or more and 700 or less at which the swellability of the flexographic printing plate and the curability with respect to active energy rays are well maintained.

(Oligomer)

In order to impart appropriate viscoelasticity to the ink, an oligomer can also be used. Specific examples thereof include oligomers such as an acrylic resin, polyurethane, polyester, and a phthalate resin, and those having a weight average molecular weight of 10000 or less are preferable.

(Pigment)

Examples of the pigment include phthalocyanine-based pigments, soluble azo-based pigments, insoluble azo-based pigments, lake pigments, quinacridone-based pigments, isoindoline-based pigments, threne-based pigments, metal complex-based pigments, titanium oxide, zinc oxide, alumina white, calcium carbonate, barium sulfate, red iron oxide, chrome yellow, zinc yellow, Prussian blue, ultramarine blue, oxide-coated glass powder, oxide-coated mica, oxide-coated metal particles, aluminum powder, gold powder, silver powder, copper powder, zinc powder, stainless steel powder, nickel powder, organic bentonite, iron oxide, carbon black, and graphite.

As the pigment, mica (hydrous aluminum potassium silicate), talc (magnesium silicate salt), and the like, which are colorless extender pigments, can also be used, and the actinic-ray-curable ink in the present invention can also be used as an anchor ink containing no color pigment.

(Photopolymerization Initiator)

When the actinic-ray-curable ink in the present invention contains a photopolymerization initiator, the polyfunctional (meth)acrylate is used for dissolving the photopolymerization initiator, and swelling of the flexographic printing plate is reduced, which is preferable.

On the other hand, since a decomposition product or an unreacted product of a photopolymerization initiator causes odor or contamination of contents, a radiation-curable ink not containing these products may be more preferable depending on the use applications.

(Other additives)

In addition, additives such as a wax, a pigment dispersant, an antifoaming agent, and a leveling agent can be used for the actinic-ray-curable ink in the present invention.

It is preferable that the actinic-ray-curable ink in the present invention does not substantially contain components capable of swelling a flexographic printing plate, such as water or a solvent. The phrase "substantially not containing" described herein means that the total content of the moisture content and the solvent in the ink is 0.5 mass% or less.

The actinic-ray-curable ink in the present invention can be synthesized by adding a pigment and an arbitrary additive to a varnish obtained by dissolving a polyfunctional (meth)acrylate and an arbitrary oligomer or monofunctional (meth)acrylate and dispersing and mixing the mixture using an attritor, a ball mill, a sand mill, or the like.

[Substrate]

In the method for producing a printed matter of the present invention, as the substrate, it is possible to use coated paper such as art paper, coated paper, and cast paper, non-coated paper such as high-quality paper, newspaper paper, and Japanese paper, and non-absorbent materials such as synthetic paper, aluminum deposited paper, metal, and film.

Examples of the film include polyesters such as polyethylene, polypropylene, polyethylene terephthalate, polybutylene terephthalate, and polylactic acid, polyamide, polyimide, polyalkyl (meth)acrylate, polystyrene, poly-$\alpha$-methylstyrene, polycarbonate, polyvinyl alcohol, polyvinyl acetal, polyvinyl chloride, and polyvinylidene fluoride.

The film may be subjected to, for example, surface treatment such as burning treatment, adhesion-improving coating, and chemical vapor deposition.

A thickness of the film is preferably 5 $\mu$m or more and more preferably 10 $\mu$m or more, from the viewpoint of the mechanical strength of the film required for printing as long as the film is formed of a single layer. The thickness is preferably 50 $\mu$m or less and more preferably 30 $\mu$m or less, which lowers the cost of the film.

When a multilayer film having already been laminated is subjected to surface printing, the thickness of the film is preferably 50 $\mu$m or more and 200 $\mu$m or less.

As the form of the substrate, either a sheet form or a roll form can be used. When printing is performed on a thin film for flexible packaging, it is preferable to use a roll film and perform roll-to-roll printing.

[Irradiation step]

In the irradiation step of the method for producing a printed matter of the present invention, examples of the active energy ray source include ultraviolet rays (particularly, LED-UV), electron beams, gamma rays, and the like. Radiation, such as an electron beam and a gamma ray, generates high-energy secondary electrons in a substance to be irradiated, excites surrounding molecules, and generates reactive active species represented by radicals. When the substance to be irradiated is an actinic-ray-curable ink, radicals are generated in the ink, and radical polymerization proceeds to form a cured/ink film.

In particular, an electron beam at a low acceleration voltage has sufficient permeability with respect to a thickness of an ink film of 10 $\mu$m or less, and can give energy necessary for curing. The electron beam does not require special qualification at the time of use, and is easy to handle, which is also preferably used.

Since the transmission depth of the electron beam is determined by an acceleration voltage, the acceleration voltage of the electron beam is preferably 50 kV or more, more preferably 90 kV or more, and still more preferably 110 kV or more, which allows a sufficient dose of the electron beam to pass through the ink film. When the transmission depth increases, the dose given to the inside of the substrate also increases, and hence the transmission depth is preferably 300 kV or less, more preferably 200 kV or less, and still more preferably 150 kV or less.

As the irradiation dose of the electron beam is higher, the amount of radical species generated in the target substance increases, but the damage of the substrate also increases, and hence the irradiation dose is preferably 10 kGy or more and 100 kGy or less, and more preferably 20 kGy or more and 50 kGy or less.

EXAMPLES

Hereinafter, the present invention will be specifically described with reference to Examples. However, the present invention is not limited thereto.

[Evaluation method]

(1) Test printing

Various flexographic printing plates were mounted on a flexographic printing machine ("ONYX XS" ECO ONE 800 manufactured by UTECO) using an anilox roll ("NOVA GOLD" 460lpi manufactured by PRAXAIR SURFACE TECHNOLOGIES, INC., **2.5** ml/m$^3$), and a cushion tape ("DUPLO FLEX" 5.3 Medium manufactured by Lohmann Tape), and various actinic-ray-curable inks were transferred to a PET film ("Lumirror" T-25 manufactured by Toray Industries, Inc.) having a thickness of 25 $\mu$m at a printing speed of 200 m/min. Subsequently, the ink was cured by electron beam irradiation at an acceleration voltage of 110 kV and an irradiation dose of 30 kGy to obtain a printed matter. For each level, 2000 m continuous printing was performed, and samples were taken at the start of printing and every 500 m of printing.

(2) Swelling rate of plate

The solid part of the plate to be evaluated was cut into 2 cm × 2 cm at 0.8 mm from the surface in the depth direction to obtain cut pieces, and 1,6-hexanediol diacrylate was brought into contact with the front surface of the solid part of the cut piece at 25°C for 24 hours. Thereafter, 1,6-hexanediol diacrylate was wiped off with gauze, the ratio of the mass change before and after contact with respect to the mass before contact was calculated, and an average value of the ratios measured twice was taken as the swelling rate.

(3) Spread of halftone dots

For the 25% halftone-dot portion of the printed matter, a dot gain value was measured using the reflection densitometer (SpectroEye from GretagMacbeth). The values of the printed matters at the start of printing and at the end of printing were measured, and when the change was within a range of ±4%, it was evaluated that there was no deformation of halftone dots and the quality was stable. When the change was within a range of ±2%, it was determined to be extremely good.

(4) Plate entanglement

The presence or absence of plate entanglement was evaluated in the highlight part (20% or less halftone dots) of the printed matter.

A: Plate entanglement was not observed at all through continuous printing of 2000 m.
B: Plate entanglement was not observed up to 1500 m from the start of printing, and plate entanglement was observed at 2000 m.
C: Plate entanglement was not observed up to 1000 m from the start of printing, and plate entanglement was observed at 1500 m.
D: Plate entanglement was not observed up to 500 m from the start of printing, and plate entanglement was observed at 1000 m.
E: Plate entanglement was not observed at 500 m from the start of printing.

(5) Laminate peeling strength

A mixed laminate adhesive (TAKELAC A 626/TAKENATE A-50, manufactured by Mitsui Chemicals, Inc.) was applied to the printed matter obtained by the test printing at the start of printing so as to have a film thickness of 3.0 g/m$^2$, and the printed matter was stacked with a 60 μm-thick unstretched polypropylene film (CPP) (ZK-297, manufactured by TORAY ADVANCED FILM CO., LTD.). Thereafter, aging was performed at 40°C for 3 days to obtain a laminate sample. The ink solid part in the laminate sample was cut into a strip shape with a width of 15 mm, and the strip was peeled off at 90° at 300 mm/min using a Tensilon universal tester (RTG-1210 manufactured by ORIENTEC CORPORATION) to measure the peeling strength.

When the peeling strength was less than 1.0 N/15 mm, the adhesion was insufficient, when the peeling strength was 1.0 N/15 mm or more and less than 1.5 N/15 mm, the adhesion was slightly good, when the peeling strength was 1.5 N/15 mm or more and less than 2.0 N/15 mm, the adhesion was good, when the peeling strength was 2.0 N/15 mm or more and less than 3.0 N/15 mm, the adhesion was considerably good, and when the peeling strength was 3.0 N/15 mm or more, the adhesion was evaluated to be extremely good.

[Starting materials for ink]

Pigment: LIONOL BLUE FG7330 (manufactured by Toyocolor Co., Ltd.)
Pigment dispersant: "DISPERBYK" (registered trademark) 2012 (manufactured by BYK Chemie Ltd. Japan)
Polyfunctional (meth)acrylate 1: 1,9-Nonanediol diacrylate ("Light Acrylate" (registered trademark) 1,9ND-A manufactured by Kyoeisha Chemical Co., Ltd.), SP value: 9.4, no alicyclic skeleton
Polyfunctional (meth)acrylate 2: Tripropylene glycol diacrylate ("Miramer" (registered trademark) M220 manufactured by Miwon Specialty Chemical Co., Ltd.), SP value: 9.3, no alicyclic skeleton, alkylene oxide group present
Polyfunctional (meth)acrylate 3: Polyethylene glycol diacrylate ("Miramer" (registered trademark) M280 manufactured by Miwon Specialty Chemical Co., Ltd.), SP value: 9.7, no alicyclic skeleton, alkylene oxide group present
Polyfunctional (meth)acrylate 4: Tricyclodecane dimethanol diacrylate ("NK Ester" (registered trademark) A-DCP manufactured by SHIN-NAKAMURA CHEMICAL Co., Ltd.), SP value: 9.2, alicyclic skeleton present
Oligomer: urethane acrylate (UF-8001G manufactured by Kyoeisha Chemical Co., Ltd.)
Polymerization inhibitor: p-methoxyphenol (manufactured by Wako Pure Chemical Industries, LTD).

[Preparation of ink]

An ink composition containing a pigment, a polyfunctional (meth)acrylate, an oligomer, and other auxiliaries shown in Table 1 was weighed and dispersed using a batch-type sand mill (manufactured by Hayashi Shoten Co., Ltd.) to obtain actinic-ray-curable inks 1 to 6.

[Table 1]

|  |  |  | Ink | | | | | |
|---|---|---|---|---|---|---|---|---|
|  |  |  | 1 | 2 | 3 | 4 | 5 | 6 |
| Composition (mass%) |  | Pigment | 16.0 | 16.0 | 16.0 | 16.0 | 16.0 | 16.0 |
|  |  | Pigment dispersant | 1.0 | 1.0 | 1.0 | 1.0 | 1.0 | 1.0 |
|  |  | Polyfunctional (meth)acrylate 1 | 64.0 | 22.0 | 42.0 | 75.0 | 0.0 | 31.0 |
|  |  | Polyfunctional (meth)acrylate 2 | 16.4 | 58.4 | 38.4 | 5.4 | 16.4 | 5.4 |
|  |  | Polyfunctional (meth)acrylate 3 | 0.0 | 0.0 | 0.0 | 0.0 | 0.0 | 44.0 |
|  |  | Polyfunctional (meth)acrylate 4 | 0.0 | 0.0 | 0.0 | 0.0 | 64.0 | 0.0 |
|  |  | Oligomer | 2.5 | 2.5 | 2.5 | 2.5 | 2.5 | 2.5 |
|  |  | Polymerization Inhibitor | 0.1 | 0.1 | 0.1 | 0.1 | 0.1 | 0.1 |

In the case of using a commercially available ink, the following product numbers were used.

Ink 7: PHA (manufactured by T&K TOKA CO., LTD.), containing 40 mass% or more and 80 mass% or less of a polyfunctional (meth)acrylate having an SP value of 9.3
Ink 8: PHA-L03 (UV flexographic ink manufactured by T&K TOKA CO., LTD.), content of a polyfunctional (meth)acrylate having an SP value of 9.5 or less: less than 40 mass%

[Starting materials for flexographic printing original plate]

Binder resin 1: Resin obtained by reacting 1.0 mol% of succinic anhydride with partially saponified polyvinyl alcohol ("JR-05" manufactured by JAPAN VAM & POVAL CO., LTD.), then reacting all carboxylic acid moieties with glycidyl methacrylate to convert the carboxylic acid moieties into (meth)acrylate groups SP value: 12.4
Binder resin 2: Nitrile butadiene rubber (N220S manufactured by JSR Corporation), SP value: 10.1
Monomer 1: Polyethylene glycol monomethacrylate ("Blemmer" (registered trademark) AE400 manufactured by NOF CORPORATION), SP value: 10.4
Monomer 2: 1:2 Adduct of glycidyl acrylate of tripropylene glycol (dihydroxy functional product, "Epoxy ester" (registered trademark) 200PA manufactured by NOF CORPORATION), SP value: 11.3
Additive: Trimethylolpropane tri(polyethylene glycol)ether (weight average molecular weight: 400, TMP-60 manufactured by NIPPON NYUKAZAI CO., LTD.), SP value: 10.5
Photopolymerization initiator: 1-Hydroxycyclohexyl dimethyl ketone
UV absorber: 2-(2'-Hydroxy-3'-t-butyl-5'-methylphenyl)-5-chlorobenzotriazole

[Making of photosensitive flexographic printing original plate]

Various raw materials having the composition shown in Table 2 were weighed, dissolved in a mixed solvent of an alcohol mixture ("SOLMIX" (registered trademark) H-11 manufactured by Japan Alcohol Trading CO., LTD.) and water, then applied to a polyester (PET) film ("PANACREA" (registered trademark) ACM188 manufactured by PANAC CO., LTD.) having an easily adhesive layer and a thickness of 188 μm while adjusting the dry film thickness to 1.14 mm, and dried at 60°C for 2.5 hours. A mixed solvent containing water and ethanol in a mass ratio of 50/50 was applied to the obtained

8

photosensitive resin layer, and a laminated film having a heat-sensitive mask layer was pressure-bonded to obtain flexographic printing original plates 1 and 2.

[Table 2]

| | | Flexographic printing original plate | |
|---|---|---|---|
| | | 1 | 2 |
| Composition (mass%) | Binder resin 1 | 42.7 | 0.0 |
| | Binder resin 2 | 0.0 | 20.0 |
| | Monomer 1 | 28.1 | 23.9 |
| | Monomer 2 | 28.1 | 15.0 |
| | Additive | 0.0 | 40.0 |
| | Photopolymerization Initiator | 1.0 | 1.0 |
| | UV absorber | 0.1 | 0.1 |

In the case of using a commercially available flexographic printing original plate, the following product numbers were used.

Flexographic printing original plate 3: DF114HR2 (manufactured by Toray Industries, Inc.), containing 30 mass% or more of a compound having an SP value of 10.0 or more

Flexographic printing original plate 4: NX114 (manufactured by Eastman Kodak Company), not containing a compound having an SP value of 10.0 or more

[Making of flexographic printing plate]

The flexographic printing original plate was back-exposed from the base material side with a high luminance chemical lamp (TL-K 40W/10R manufactured by Philips) so that an integrated light amount was 700 mJ/cm$^2$. Thereafter, a pattern was drawn with a laser using an external drum type platesetter ("CDI SPARK" 2530 manufactured by Esko-Graphics BV.), and an image mask was formed from the heat-sensitive mask layer. Then, under the atmosphere, main exposure was performed from an image mask side with the high-luminance chemical lamp (TL-K 40W/10R) similarly to the back exposure so that the integrated light amount was 12,000 mJ/cm$^2$. Then, the photosensitive flexographic original printing plate was developed in tap water having a temperature adjusted to 25°C with a batch-type exposure development machine ("Inglese" W43 manufactured by Inglese, s.r.l.) for 80 seconds, and drying in the oven at 60°C for 10 minutes. Next, a post exposure was performed with the high-luminance chemical lamp (TL-K 40W/10R) so that the integrated light amount was 12,000 mJ/cm$^2$ to obtain a flexographic printing plate.

[Example 1]

A flexographic printing plate was prepared using the flexographic printing original plate 3 as the flexographic printing original plate, and printing was performed using the ink 1 as the ink. The swelling rate of the flexographic printing plate was as small as 2.1% and was hardly deformed, and no ink entanglement was observed even at the time of printing, and the spread of halftone dots was 2%, which was very good. The laminate peeling strength was 1.8 N/15 mm, which was favorable. The results are shown in Table 3.

[Examples 2 to 6]

Printing was performed in the same manner as in Example 1, except that the inks 2 to 5 and 7 were used as the ink.

In all of Examples 2 to 6, the continuous printing quality was stable. When the content of the polyfunctional (meth) acrylate having an SP value of 9.5 or less was low, ink entanglement tended to easily occur, and when the content was high, the spread of halftone dots tended to increase. Among them, in Example 5 using tricyclodecane dimethanol diacrylate, in addition to the stability of the printing quality, the adhesion of the printed matter was also very good. The results are shown in Table 3.

[Examples 7 and 8]

Printing was performed in the same manner as in Example 1, except that the flexographic printing original plates 1 and 2 were used as the flexographic printing original plate. When the swelling rate of the flexographic printing plate was high, halftone dots tended to spread. The results are shown in Table 3.

[Comparative Example 1]

Printing was performed in the same manner as in Example 1, except that the commercially available flexographic printing original plate 4 was used as the flexographic printing original plate. Ink entanglement was observed from 500 m after the start of printing, the spread of halftone dots was as large as 6%, and the printing quality was deteriorated as printing was performed. The results are shown in Table 3.

[Comparative Example 2]

Printing was performed in the same manner, except that the ink 6 was used as the ink. Since the ink 6 contained the polyfunctional (meth)acrylate having a large SP value and high hydrophilicity, a state where halftone dots spread was observed. The results are shown in Table 3.

[Comparative Example 3]

A flexographic printing plate was prepared using the flexographic printing original plate 4 as the flexographic printing original plate, and printing was performed using the ink 6 as the ink. Although the spread of halftone dots was good, ink entanglement easily occurred. The results are shown in Table 3.

[Comparative Example 4]

A flexographic printing plate was prepared using the flexographic printing original plate 3 as the flexographic printing original plate, and printing was performed using the ink 8 as the ink. Although ink entanglement was not observed up to 2000 m after the start of printing, the halftone dot tended to change to a thin side, and ink side extraction of the flexographic plate component was presumed. The results are shown in Table 3.

[Table 3]

| | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|
| Ink | 1 | 2 | 3 | 4 | 5 | 7 | 1 | 1 | 1 | 6 | 6 | 8 |
| Flexographic printing original plate | 3 | 3 | 3 | 3 | 3 | 3 | 1 | 2 | 4 | 3 | 4 | 3 |
| Swelling rate (wt%) of plate | 2.1 | 2.1 | 2.1 | 2.1 | 2.1 | 2.1 | 4.4 | 2.7 | 18.2 | 2.1 | 18.2 | 2.1 |
| Spread of halftone dots (%) | 2 | 4 | 1 | 3 | 2 | 2 | 4 | 2 | 6 | 5 | 2 | -5 |
| Plate entanglement | A | A | B | A | A | A | A | B | E | D | D | B |
| Laminate peeling strength (N/15 mm) | 1.8 | 1.0 | 1.1 | 1.8 | 2.5 | 1.3 | 1.7 | 1.8 | 1.8 | 0.6 | 0.8 | 0.8 |

**Claims**

1. A method for producing a printed matter, the method using a flexographic printing plate including a base material and a resin layer having a printing relief formed thereon, and an actinic-ray-curable ink containing at least one or more polyfunctional (meth)acrylates and a pigment, the method satisfying the following (A) to (C):

   (A) the resin layer having a printing relief formed thereon contains 30 mass% or more of a compound A having an SP value, as calculated by the Fedors method, of 10.0 or more;
   (B) an SP value of the polyfunctional (meth)acrylate as calculated by the Fedors method is 8.0 or more and 9.5 or less; and
   (C) a content of the polyfunctional (meth)acrylate satisfying the SP value in the ink is 40 mass% or more and 85 mass% or less.

2. The method for producing a printed matter according to claim 1, wherein a swelling rate after the resin layer is brought into contact with 1,6-hexanediol diacrylate at 25°C for 24 hours is 5 mass% or less.

3. The method for producing a printed matter according to claim 1 or 2, wherein the compound A has at least any one of a hydroxyl group and an ethylene oxide group.

4. The method for producing a printed matter according to any one of claims 1 to 3, wherein the compound A does not contain a (meth)acrylate group.

5. The method for producing a printed matter according to any one of claims 1 to 4, wherein the compound A is one or more selected from nitrile butadiene rubber, urethane rubber, chlorinated polyethylene, vinyl acetate rubber, polyvinyl alcohol, polyamide, polyurethane, polyvinyl pyrrolidone, polyether, and polyester.

6. The method for producing a printed matter according to any one of claims 1 to 5, wherein a number average molecular weight of the polyfunctional (meth)acrylate is 200 or more and 700 or less.

7. The method for producing a printed matter according to any one of claims 1 to 6, wherein the polyfunctional (meth)acrylate does not contain an alkylene oxide group.

8. The method for producing a printed matter according to any one of claims 1 to 7, wherein the polyfunctional (meth)acrylate contains an alicyclic skeleton or an aliphatic skeleton having 6 to 18 carbon atoms.

9. The method for producing a printed matter according to any one of claims 1 to 8, wherein the polyfunctional (meth)acrylate is tricyclodecane dimethanol diacrylate.

10. The method for producing a printed matter according to any one of claims 1 to 9, wherein the actinic-ray-curable ink contains a photopolymerization initiator.

11. The method for producing a printed matter according to any one of claims 1 to 10, wherein the actinic-ray-curable ink does not substantially contain water and a solvent.

12. An actinic-ray-curable ink comprising at least one or more polyfunctional (meth)acrylates and a pigment,

    wherein the polyfunctional (meth)acrylate contains tricyclodecane dimethanol diacrylate,
    an SP value of the polyfunctional (meth)acrylate as calculated by the Fedors method is 8.0 or more and 9.5 or less, and
    a content of the polyfunctional (meth)acrylate satisfying the SP value in the ink is 40 mass% or more and 85 mass% or less.

## INTERNATIONAL SEARCH REPORT

| International application No. |
|---|
| **PCT/JP2023/008505** |

**A.    CLASSIFICATION OF SUBJECT MATTER**

*B41M 1/04*(2006.01)i; *B41N 1/12*(2006.01)i; *C09D 4/02*(2006.01)i; *C09D 11/101*(2014.01)i
FI:    B41M1/04; B41N1/12; C09D11/101; C09D4/02

According to International Patent Classification (IPC) or to both national classification and IPC

**B.    FIELDS SEARCHED**

Minimum documentation searched (classification system followed by classification symbols)

B41M1/04; B41N1/12; C09D4/02; C09D11/101

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2019-137735 A (MIMAKI ENGINEERING CO., LTD.) 22 August 2019 (2019-08-22) claims, paragraphs [0002]-[0072] | 12 |
| A | | 1-11 |
| A | JP 2020-140182 A (ASAHI KASEI CORP.) 03 September 2020 (2020-09-03) entire text | 1-12 |
| A | JP 2017-114024 A (SUMITOMO RIKO CO., LTD.) 29 June 2017 (2017-06-29) entire text, all drawings | 1-12 |
| A | JP 2013-29738 A (FUJIFILM CORP.) 07 February 2013 (2013-02-07) entire text | 1-12 |
| A | JP 2012-512760 A (TECHNOSOLUTIONS ASSESSORIA LTD.) 07 June 2012 (2012-06-07) entire text, all drawings | 1-12 |
| A | US 2013/0149507 A1 (SUN CHEMICAL CORP.) 13 June 2013 (2013-06-13) entire text, all drawings | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 April 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/008505**

| Patent document cited in search report | | | Publication date (day/month/year) | Patent family member(s) | | | Publication date (day/month/year) |
|---|---|---|---|---|---|---|---|
| JP | 2019-137735 | A | 22 August 2019 | US claims, paragraphs [0003]-[0092] EP | 2019/0241757 3524649 | A1 A1 | |
| JP | 2020-140182 | A | 03 September 2020 | (Family: none) | | | |
| JP | 2017-114024 | A | 29 June 2017 | (Family: none) | | | |
| JP | 2013-29738 | A | 07 February 2013 | US | 2013/0029267 | A1 | |
| JP | 2012-512760 | A | 07 June 2012 | US EP | 2011/0247508 2379336 | A1 A1 | |
| US | 2013/0149507 | A1 | 13 June 2013 | WO | 2012/023933 | A1 | |

Form PCT/ISA/210 (patent family annex) (January 2015)

**REFERENCES CITED IN THE DESCRIPTION**

**Non-patent literature cited in the description**

- **ROBERT F. FEDORS**. *Polymer Engineering and Science*, 1974, vol. 14, 147-154